# EUROPÄISCHE PATENTSCHRIFT

(11) **EP 3 139 060 B1**
(45) Veröffentlichungstag und Bekanntmachung des Hinweises auf die Patenterteilung: **18.03.2020**
(21) Anmeldenummer: 16187435.9
(22) Anmeldetag: 06.09.2016
(51) Int. Cl.: F16D 67/04

(54) **VERWENDUNG EINER KUPPLUNGS- UND BREMSVORRICHTUNG.**
USE OF COMBINED CLUTCH AND BRAKE DEVICE.
UTILISATION D'UN DISPOSITIF COMBINÉ D'EMBRAYAGE ET DE FREINAGE .

(30) Priorität: 07.09.2015 DE 102015114926
(43) Veröffentlichungstag der Anmeldung: 08.03.2017
(73) Patentinhaber: Desch Antriebstechnik GmbH & Co. KG, 59759 Arnsberg (DE)
(72) Erfinder: Wilmes, Markus, 59759 Arnsberg (DE); Reinartz, Thomas, 45549 Sprockhövel (DE)
(74) Vertreter: Basfeld, Rainer

(56) Entgegenhaltungen:
- EP-A1- 2 829 764
- DE-A1-102008 056 665
- US-A1- 2002 086 756

## Beschreibung

Die vorliegende Erfindung betrifft die Verwendung einer kombinierten Kupplungs- und Bremsvorrichtung für eine Bearbeitungsmaschine gemäß Anspruch 1.

Die Bearbeitungsmaschine kann insbesondere als Presse, beispielsweise als Umformpresse ausgebildet sein.

Eine kombinierte Kupplungs- und Bremsvorrichtung der eingangs genannten Art ist beispielsweise aus den Druckschriften DE 25 49 714, DE29 38 394 C2, EP 2 090 800 A1 und EP 2 829 764 A1 bekannt geworden.

Im Wesentlichen umfasst eine kombinierte Kupplungs- und Bremsvorrichtung der vorgenannten Art eine Kupplung und eine erste Bremse, sowie eine zweite Bremse. Die Kupplung und die erste Bremse werden oft zusammengefasst als Kupplungs-Brems-Kombination bezeichnet. Die zweite Bremse agiert als Sicherheitsbremse, die sicherstellt, dass sich die an die Kupplungs- und Bremsvorrichtung angeschlossene Welle nicht dreht. Dieses Sicherheitsfeature ist insbesondere relevant, wenn es sich bei der Bearbeitungsmaschine um eine Presse handelt, deren Stößel in einer vorbestimmten Höhe, beispielsweise zu Wartungszwecken, festgesetzt werden soll.

Die Komponenten Kupplung und erste Bremse sind bei der Ausführungsform der Kupplungs- und Bremsvorrichtung gemäß EP 2 829 764 A1 an ein gemeinsames hydraulisches Betätigungssystem angeschlossen, während die zweite Bremse an ein weiteres hydraulisches Betätigungssystem angeschlossen ist.

Nachteilig an dieser Ausgestaltung sind beispielsweise die Abstimmungsmöglichkeiten der Kupplungs-Brems-Kombination. Die Kupplung und die Bremse sind über das gemeinsame hydraulische Betätigungssystem zwangsweise gekoppelt.

Hier setzt die vorliegende Erfindung an und macht es sich zur Aufgabe eine Verwendung einer Kupplungs- und Bremsvorrichtung vorzuschlagen, insbesondere derart, dass die Kupplungs- und Bremsvorrichtung größere Abstimmungsmöglichkeiten bietet.

Erfindungsgemäß wird diese Aufgabe durch die Verwendung gemäß den Merkmalen des Anspruchs 1 gelöst. Dadurch, dass die erste Bremse mit einem ersten Betätigungssystem zur Ansteuerung der ersten Bremse, die zweite Bremse mit einem zweiten Betätigungssystem zur Ansteuerung der zweiten Bremse und die Kupplung mit einem dritten Betätigungssystem zur Ansteuerung der Kupplung, ausgestattet ist, wobei es sich bei den Betätigungssystemen um separate, voneinander entkoppelte Betätigungssysteme handelt, kann eine Kupplungs- und Bremsvorrichtung mit sehr individuellen Abstimmungsmöglichkeiten bereitgestellt werden, da die Bremsen und die Kupplung völlig unabhängig voneinander angesteuert werden können.

Weitere vorteilhafte Ausgestaltungen der vorgeschlagenen Erfindung ergeben sich insbesondere aus den Merkmalen der Unteransprüche.

Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass es sich bei mindestens einer, vorzugsweise bei den Bremsen, um Reibbremsen handelt.

In einer weiteren vorteilhaften Ausgestaltung der Erfindung kann vorgesehen sein, dass es sich bei der Kupplung um eine lösbare Kupplung, insbesondere eine Reibkupplung, handelt.

In einer weiteren vorteilhaften Ausgestaltung der Erfindung kann vorgesehen sein, dass das Betätigungssystem eine Zuleitung für beispielsweise Hydraulikflüssigkeit, einen Kolben, der über die Hydraulikflüssigkeit aus einem Reservoir mit Druck beaufschlagt werden kann und in einem Zylinder geführt ist und ein Federmittel, welches den Kolben in einem drucklosen Zustand in eine vorbestimmte Position schiebt, ggf. noch ein Ventil, welches als Schaltmittel zwischen einer gemeinsamen Druckquelle fungieren kann, umfasst.

In einer weiteren vorteilhaften Ausgestaltung der Erfindung kann vorgesehen sein, dass die erste Bremse und die Kupplung eine Kupplungs-Brems-Kombination ausbilden.

In einer weiteren vorteilhaften Ausgestaltung der Erfindung gemäß Anspruch 8 kann vorgesehen sein, dass die zweite Bremse als Sicherheitsbremse verwendet wird.

Eine Sicherheitsbremse stellt sicher, dass, beispielsweise im Falle einer Wartung der Bearbeitungsmaschine, keine Gefahr für das Wartungspersonal besteht, dahingehen, dass sich die Bearbeitungsmaschine, beispielsweise eine Presse, unbeabsichtigt in Bewegung setzt. Insbesondere wegen der separaten Ansteuerungsmöglichkeit der zweiten Bremse, sprich der Sicherheitsbremse, ist ein hohes Maß an Sicherheit gegeben, insbesondere da grundsätzlich keine Fehler auftreten können, die beispielsweise auf weitere an das Betätigungssystem angeschlossene Komponenten zurückzuführen sind.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

Erfindungsgemäß ist vorgesehen, dass die erste Bremse und die Kupplung als Kupplungs-Brems-Kombination verwendet werden. Eine sogenannte "Kupplungs-Brems-Kombination" bildet zumeist eine Einheit und wird einer Bearbeitungsmaschine vorgeschaltet, um einerseits ein Anfahren der Bearbeitungsmaschine gegen ein hohes Widerstandsmoment zu ermöglichen, sowie ein geeignetes Drehbewegungsprofil zum Antrieb der Bearbeitungsmaschine aus einem zumeist mit annähernd konstanter Drehzahl drehenden Schwungrad zu ermöglichen. Hier bietet die Verwendung der ersten Bremse und der Kupplung mit jeweils separaten Betätigungssystemen entsprechend viele Gestaltungsmöglichkeiten hinsichtlich des Drehbewegungsprofils, als auch des Anfahrens.

Mit der vorliegenden Erfindung wird ein vorteilhaftes Verfahren zur Betätigung einer Kupplungs- und Bremsvorrichtung geschaffen.

Dadurch, dass das erste Betätigungssystem für die erste Bremse und das dritte Betätigungssystem für die Kupplung in einer zeitlich überschneidenden Weise angesteuert werden, kann beispielsweise die Bremse zunächst langsam gelöst werden, während zeitlich etwas verzögert, jedoch überschneidend hierzu ein Antriebsmoment über die Kupplung übertragen wird. Hier ist eine individuelle Auslegung der zeitlichen Verzögerung bzw. Überschneidung durch die getrennten Betätigungssysteme möglich.

In einer alternativen Ausgestaltung der Erfindung kann vorgesehen sein, dass das erste Betätigungssystem für die erste Bremse und das dritte Betätigungssystem für die Kupplung nicht gleichzeitig angesteuert werden. Diese Möglichkeit ergibt sich ebenfalls erst aus den getrennten Betätigungssystemen. Grundsätzlich kann beispielsweise erst die erste Bremse vollständig geöffnet und erst anschließend die Kupplung geschlossen werden.

In einer weiteren Ausgestaltung der Erfindung gemäß Anspruch 9 kann vorgesehen sein, dass es sich bei der Bearbeitungsmaschine um eine Presse handelt,

Hiermit kann eine Presse mit sehr individuellen Abstimmungsmöglichkeiten bereitgestellt werden, da die Bremsen und die Kupplung völlig unabhängig voneinander angesteuert werden können. Die Presse kann insbesondere als Umformpresse ausgebildet sein.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

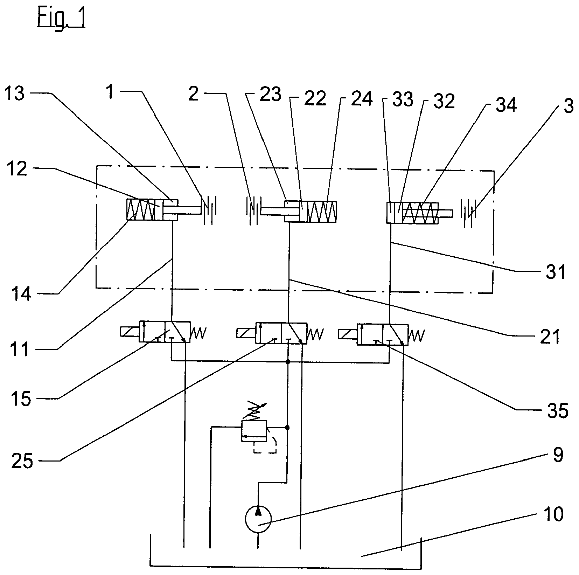

- Fig. 1: eine Prinzipdarstellung einer erfindungsgemäß verwendeten Kupplungs- und Bremsvorrichtung;

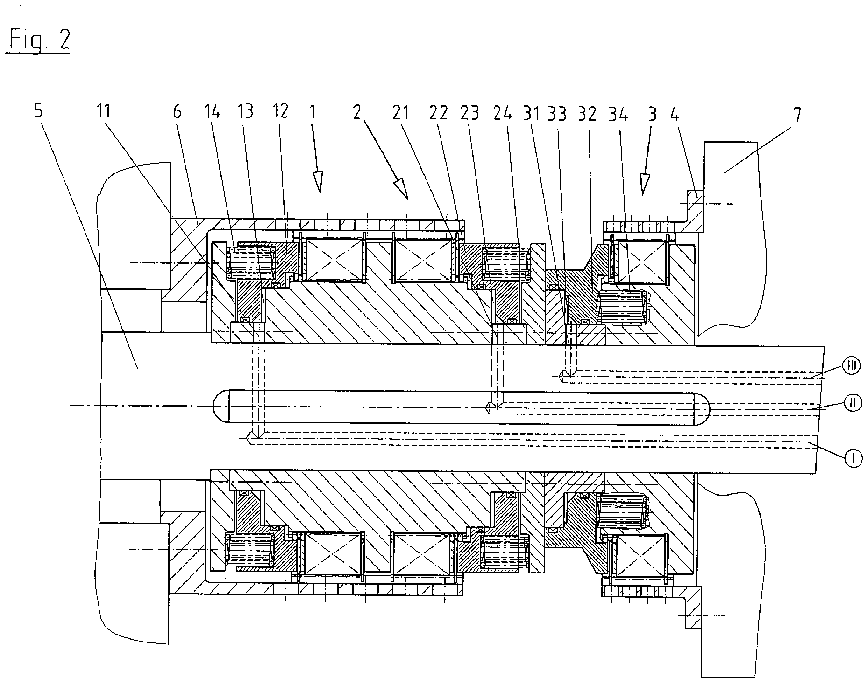

- Fig. 2: eine Schnittansicht durch eine erfindungsgemäß verwendeten Kupplungs- und Bremsvorrichtung;

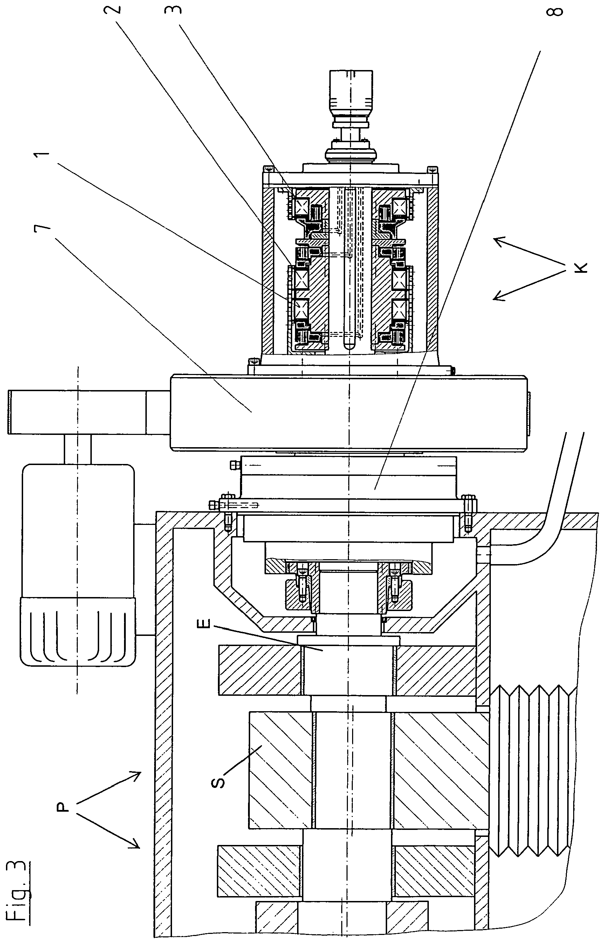

- Fig. 3: eine erfindungsgemäß verwendete Kupplungs- und Bremsvorrichtung mit einer angeschlossenen Bearbeitungsmaschine;
- Fig. 4: eine Presse als Bearbeitungsmaschine mit einer erfindungsgemäß verwendeten Kupplungs- und Bremsvorrichtung.

Folgende Bezugszeichen werden in den Abbildungen verwendet:
- K: Kupplungs- und Bremsvorrichtung
- P: Presse
- S: Pressenstößel
- E: Exzenterwelle
- I: erstes Betätigungssystem
- II: zweites Betätigungssystem
- III: drittes Betätigungssystem
- 1: erste Bremse
- 2: zweite Bremse
- 3: Kupplung
- 4: Eingang (Eingangsflansch)
- 5: Ausgang (Ausgangswelle)
- 6: Gehäuse
- 7: Schwungsrad
- 8: Getriebe
- 9: Druckquelle
- 10: Reservoir
- 11: Zuleitung
- 12: Kolben
- 13: Zylinder
- 14: Federmittel
- 15: Ventil
- 21: Zuleitung
- 22: Kolben
- 23: Zylinder
- 24: Federmittel
- 25: Ventil
- 31: Zuleitung
- 32: Kolben
- 33: Zylinder
- 34: Federmittel
- 35: Ventil

Eine erfindungsgemäß verwendete Kupplungs- und Bremsvorrichtung K umfasst im Wesentlichen eine Kupplung 3, eine erste Bremse 1 und eine zweite Bremse 2. Ferner umfasst die erfindungsgemäße Kupplungs- und Bremsvorrichtung einen Eingang 4, einen Ausgang 5 und ein ortsfestes Gehäuse 6.

Der Eingang kann beispielsweise als Eingangsflansch 4 ausgestaltet und zum Anschluss an ein Schwungrad 7 eingerichtet sein. Der Ausgang kann beispielsweise als Ausgangswelle 5 ausgestaltet und zum Anschluss an ein Getriebe 8, insbesondere Planetengetriebe, eingerichtet sein. Das Getriebe 8 wiederum treibt in der Regel eine Bearbeitungsmaschine, beispielsweise eine Presse, insbesondere dessen Pressenstößel, an. Grundsätzlich ist die Kupplungs- und Bremsvorrichtung dazu eingerichtet ein Drehmoment von dem Eingang 4 zum Ausgang 5 zu übertragen bzw. den Ausgang 5 über die Bremsen 1 und/oder 2 abzubremsen, sprich ein Drehmoment über das ortsfeste Gehäuse 6 abzuleiten. Grundsätzlich ist die erste Bremse 1 als Betriebsbremse und die zweite Bremse 2 als Sicherheitsbremse vorgesehen.

Sowohl die Kupplung 3 als auch die erste Bremse 1 und die zweite Bremse 2 werden über jeweils ein separates Betätigungssystem (I, II, III) angesteuert. Insofern umfasst die erfindungsgemäße Kupplungs- und Bremsvorrichtung ein erstes Betätigungssystem I für die erste Bremse 1, ein zweites Betätigungssystem II für die zweite Bremse 2 und ein drittes Betätigungssystem III für die Kupplung 3. Bei den Betätigungssystemen handelt es sich vorzugsweise um hydraulische Betätigungssysteme.

In der Regel umfasst ein Betätigungssystem eine Zuleitung für beispielsweise Hydraulikflüssigkeit, einen Kolben, der über die Hydraulikflüssigkeit aus einem Reservoir 10 mit Druck beaufschlagt werden kann und in einem Zylinder geführt ist und ein Federmittel, welches den Kolben in einem drucklosen Zustand in eine vorbestimmte Position schiebt, ggf. noch ein Ventil, welches als Schaltmittel zwischen einer gemeinsamen Druckquelle 9 fungieren kann. Grundsätzlich können aber auch getrennte Druckquellen für jedes Betätigungssystem separat zum Einsatz kommen. Es handelt sich hier eigentlich um ein gebräuchliches Betätigungssystem für eine Kupplung bzw. Bremse, welches dem Fachmann hinreichend bekannt ist.

Insofern umfasst das erste Betätigungssystem I vorzugsweise die Zuleitung 11, den Kolben 12, den Zylinder 13 das Federmittel 14 und ggf. das Ventil 15.

Das zweite Betätigungssystem II umfasst vorzugsweise die Zuleitung 21, den Kolben 22, den Zylinder 23 das Federmittel 24 und ggf. das Ventil 25.

Das dritte Betätigungssystem III umfasst vorzugsweise die Zuleitung 31, den Kolben 32, den Zylinder 33 das Federmittel 34 und ggf. das Ventil 35.

Denkbar sind aber ebenfalls auch andere Betätigungssysteme, wie beispielsweise pneumatische oder mechanische Betätigungssysteme, für alle oder einzelne Betätigungssysteme.

Die erste Bremse 1 ist vorzugsweise derart eingerichtet, dass sie durch ein Federmittel 14, beispielsweise Schraubenfedern, in einer geschlossenen Position, sprich einer Bremsposition, gehalten wird. Soweit Druck auf das erste Betätigungssystem I für die erste Bremse 1 gegeben wird, öffnet die erste Bremse 1. Bei der ersten Bremse handelt es sich vorzugsweise um eine reibschlüssige Bremse (Reibbremse).

Die zweite Bremse 2 ist vorzugsweise derart eingerichtet, dass sie durch ein Federmittel 24, beispielsweise Schraubenfedern, in einer geschlossenen Position, sprich einer Bremsposition, gehalten wird.

Soweit Druck auf das zweite Betätigungssystem II für die zweite Bremse 2 gegeben wird, öffnet die zweite Bremse 2. Mit dieser Ausgestaltung eignet sich die zweiten Bremse 2 vorteilhafterweise als Sicherheitsbremse. Ohne Druck auf dem zweiten Betätigungssystem II wird die zweite Bremse 2 geschlossen sein, d.h. die Ausgangswelle 5 lässt sich nicht drehen und ein über beispielsweise das Getriebe 8 angeschlossener Pressenstößel wird in einer vorbestimmten Position gehalten. Bei der zweiten Bremse 2 handelt es sich vorzugsweise um eine reibschlüssige Bremse (Reibbremse).

Die Kupplung 3 ist vorzugsweise derart eingerichtet, dass sie durch ein Federmittel 34, beispielsweise Schraubenfedern, in einer ausgekuppelten Position gehalten wird. Soweit Druck auf das dritte Betätigungssystem III für die Kupplung 3 gegeben wird, kuppelt die Kupplung 3 ein. Bei der Kupplung 3 handelt es sich vorzugsweise um eine reibschlüssige Kupplung (Reibkupplung).

Die Ausgestaltung der Bremsen bzw. der Kupplung ist lediglich beispielhaft dargestellt. Insbesondere umfassen die Bremsen bzw. die Kupplung entsprechende Innen- und Außenlamellen. Andere Bauformen kommen für alle oder einzelne Bremsen bzw. Kupplung in Frage.

Weitere Details der vorgeschlagenen Kupplungs- und Bremsvorrichtung ergeben sich insbesondere aus einer beispielhaften Funktionsbeschreibung.

In einem Ausgangszustand befinden sich die Bremsen 1, 2 in einem geschlossen Zustand, sprich das erste Betätigungssystem I und das zweite Betätigungssystem II sind drucklos. Die Kupplung 3 ist geöffnet, sprich das dritte Betätigungssystem III ist ebenfalls drucklos.

Über ein Antriebsmittel, wie beispielsweise ein Elektromotor, wird das Schwungrad 7 in Drehung versetzt. Das Schwungrad 7 wiederum ist an den Eingangsflansch 4 angeschlossen. Das Antriebsmittel kann auch direkt mit dem Eingangsflansch verbunden sein.

Es wird beispielsweise zunächst Druck auf das zweite Betätigungssystem II gegeben, so dass sich die zweite Bremse 2 öffnet. Da die zweite Bremse 2 als Sicherheitsbremse fungiert, kann nunmehr die Ausgangswelle 5 über die Kupplungs-Brems-Kombination, umfassend die erste Bremse 1 und die Kupplung 3, individuell angefahren werden.

Auf Grund der separaten Betätigungssysteme der Kupplung 3 und der ersten Bremse 1 kann beispielsweise etwas Druck auf das dritte Betätigungssystem III gegeben werden, so dass etwas Drehmoment von dem Schwungrad 7 über die Kupplung 3 auf die Ausgangswelle 5 übertragen wird. Anschließend kann die erste Bremse 1 etwas gelöst werden, indem etwas Druck auf das erste Betätigungssystem I gegeben wird. Im Ergebnis wird das Bremsmoment der Bremse 1 langsam zurückgenommen und das Antriebsmoment des Schwungrads 7 wird nach und nach auf die Abtriebwelle 5 übertragen, so dass die Abtriebswelle 5 langsam anläuft.

Durch den Wechsel von Abbremsen durch die erste Bremse 1 und Antreiben durch die Kupplung 3 kann auch während des Betriebes ein individuelles Antriebsmuster erzeugt werden. Hierbei können durch die individuelle Ansteuerung der ersten Bremse 1 und der Kupplung 3 durch getrennte Betätigungssysteme besonders individuelle Antriebsmuster erzeugt werden, da beispielsweise auch beliebige Überschneidungen und zeitlicher Versatz hinsichtlich des Einsetzens der Kupplung 3 und des Lösens der ersten Bremse 1 stattfinden können.

Sofern beispielsweise eine Wartung der an die erfindungsgemäße Kupplungs- und Bremsvorrichtung angeschlossenen Bearbeitungsmaschine stattfinden soll, kann die zweite Bremse 2 als Sicherheitsbremse eingesetzt werden. Im Wesentlichen wird hierzu beispielsweise die Kupplung 3 ausgekuppelt und die erste Bremse 1 aktiviert. Zusätzlich kann nunmehr die zweite Bremse 2 aktiviert werden, die als Sicherheitsbremse konzipiert ist und im Wesentlichen verhindern soll, dass sich die Ausgangswelle 5 unbeabsichtigt dreht und sich damit, beispielsweise im Fall einer Presse als Bearbeitungsmaschine, deren Stößel unbeabsichtigt senkt.

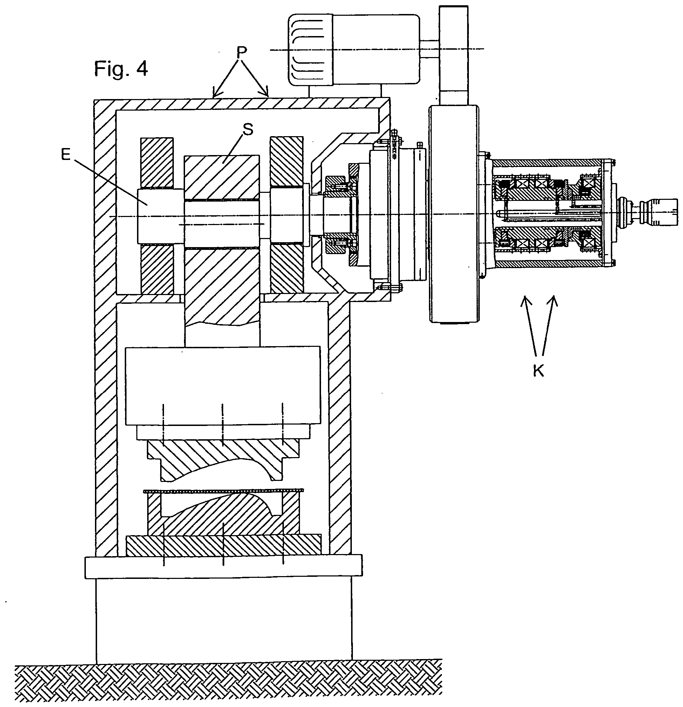

Fig. 4 ist eine schematische Darstellung einer erfindungsgemäßen Presse P als Bearbeitungsmaschine mit einer erfindungsgemäßen Kupplungs- und Bremsvorrichtung K. Es ist ersichtlich, dass die erfindungsgemäße Kupplungs- und Bremsvorrichtung K von einem Schwungrad 7 angetrieben wird. Das Schwungrad 7 wiederum wird von einem Elektromotor in Drehung versetzt. Die Kupplungs- und Bremsvorrichtung wiederum treibt über ein Getriebe 8 den Pressenstößel S bzw. eine Exzenterwelle E an, die den Pressenstößel S auf und nieder bewegt.

Mit der erfindungsgemäß verwendeten Kupplungs- und Bremsvorrichtung K lassen sich bei der erfindungsgemäßen Presse P die oben bereits skizzierten Vorteile erzielen, insbesondere besonders individuelle Antriebsmuster des Pressenstößels S und/oder eine sichere Fixierung des Pressenstößel S in einer vorbestimmten Position, beispielsweise zu Wartungszwecken.

## Patentansprüche

1. Verwendung einer Kupplungs- und Bremsvorrichtung für eine Bearbeitungsmaschine, wobei die Kupplungs- und Bremsvorrichtung umfasst
- eine erste Bremse (1), eine zweite Bremse (2) und eine Kupplung (3), wobei
- die erste Bremse (1) mit einem ersten Betätigungssystem (I) zur Ansteuerung der ersten Bremse (1),
- die zweite Bremse (2) mit einem zweiten Betätigungssystem (II) zur Ansteuerung der zweiten Bremse (2) und
- die Kupplung (3) mit einem dritten Betätigungssystem (III) zur Ansteuerung der Kupplung (3), ausgestattet ist, wobei
- es sich bei den Betätigungssystemen (I, II, III) um separate Betätigungssysteme handelt, wobei
- die erste Bremse (1) und die Kupplung (3) als Kupplungs-Brems-Kombination verwendet werden, wobei
- das erste Betätigungssystem (I) für die erste Bremse (1) und das dritte Betätigungssystem (III) für die Kupplung (3) in einer zeitlich verzögerten, jedoch überschneidenden Weise angesteuert werden, oder
- das erste Betätigungssystem (I) für die erste Bremse (1) und das dritte Betätigungssystem (III) für die Kupplung (3) nicht gleichzeitig angesteuert werden.

2. Verwendung einer Kupplungs- und Bremsvorrichtung für eine Bearbeitungsmaschine nach Anspruch 1, **dadurch gekennzeichnet, dass** es sich bei mindestens einer, vorzugsweise bei den Bremsen (1, 2), um Reibbremsen handelt.

3. Verwendung einer Kupplungs- und Bremsvorrichtung für eine Bearbeitungsmaschine nach mindestens einem der vorhergehenden Ansprüche, **dadurch gekennzeichnet, dass** es sich bei der Kupplung (3) um eine lösbare Kupplung, insbesondere eine Reibkupplung, handelt.

4. Verwendung einer Kupplungs- und Bremsvorrichtung für eine Bearbeitungsmaschine nach mindestens einem der vorhergehenden Ansprüche, **dadurch gekennzeichnet, dass** das erste Betätigungssystem (I) eine Zuleitung (11), einen Kolben (12), einen Zylinder (13), ein Federmittel (14) und insbesondere ein Ventil 15 umfasst.

5. Verwendung einer Kupplungs- und Bremsvorrichtung für eine Bearbeitungsmaschine nach mindestens einem der vorhergehenden Ansprüche, **dadurch gekennzeichnet, dass** das zweite Betätigungssystem (II) eine Zuleitung (21), einen Kolben (22), einen Zylinder (23), ein Federmittel (24) und insbesondere ein Ventil (25) umfasst.

6. Verwendung einer Kupplungs- und Bremsvorrichtung für eine Bearbeitungsmaschine nach mindestens einem der vorhergehenden Ansprüche, **dadurch gekennzeichnet, dass** das dritte Betätigungssystem (III) eine Zuleitung (31), einen Kolben (32), einen Zylinder (33), ein Federmittel (34) und insbesondere ein Ventil (35) umfasst.

7. Verwendung einer Kupplungs- und Bremsvorrichtung für eine Bearbeitungsmaschine nach mindestens einem der vorhergehenden Ansprüche, **dadurch gekennzeichnet, dass** die erste Bremse (1) und die Kupplung (3) eine Kupplungs-Brems-Kombination ausbilden.

8. Verwendung einer Kupplungs- und Bremsvorrichtung nach mindestens einem der vorhergehenden Ansprüche, **dadurch gekennzeichnet, dass** die zweite Bremse (2) als Sicherheitsbremse verwendet wird.

9. Verwendung einer Kupplungs- und Bremsvorrichtung nach einem der Ansprüche 1 - 7, **dadurch gekennzeichnet, dass** es sich bei der Bearbeitungsmaschine um eine Presse (P) mit einem Pressenstößel (S) handelt.

## Claims

1. Use of a clutch and brake device for a processing machine, wherein the clutch and brake device comprises
- a first brake (1), a second brake (2) and a clutch (3), wherein
- the first brake (1) with a first actuator system (I) for controlling the first brake (1),
- the second brake (2) with a second actuating system (II) for controlling the second brake (2) and
- the clutch (3) is equipped with a third actuating system (III) for controlling the clutch (3), wherein
- the actuating systems (I, II, III) consist of separate actuating systems, wherein
- the first brake (1) and the clutch (3) are used as a clutch-brake combination, wherein
- the first actuating system (I) for the first brake (1) and the third actuating system (III) for the clutch (3) are controlled in a time-staggered, but overlapping manner, or
- the first actuating system (I) for the first brake (1) and the third actuating system (III) for the clutch are not controlled simultaneously,

2. Use of a clutch and brake device for a processing machine according to claim 1, **characterised in that** at least one brake, preferably the brakes (1, 2) is a friction brake.

3. Use of a clutch and brake device for a processing machine according to at least one of the preceding claims, **characterised in that** the clutch (3) consists of a separable clutch, in particular a friction clutch.

4. Use of a clutch and brake device for a processing machine according to at least one of the preceding claims, **characterised in that** the first actuating system (I) comprises a supply line (11), a piston (12), a cylinder (13), a spring means (14) and in particular a valve (15).

5. Use of a clutch and brake device for a processing machine according to at least one of the preceding claims, **characterised in that** the second actuating system (II) comprises a supply line (21), a piston (22), a cylinder (23), a spring means (24) and in particular a valve (25).

6. Use of a clutch and brake device for a processing machine according to at least one of the preceding claims, **characterised in that** the third actuating system (III) comprises a supply line (31), a piston (32), a cylinder (33), a spring means (34) and in particular a valve (35).

7. Use of a clutch and brake device for a processing machine according to at least one of the preceding claims, **characterised in that** the first brake (1) and the clutch form a clutch-brake combination.

8. Use of a clutch and brake device according to at least one of the preceding claims, **characterised in that** the second brake (2) is used as a safety brake.

9. Use of a clutch and brake device according to any of claims 1 - 7, **characterised in that** the processing machine is a press (P) with a press ram (S).

## Revendications

1. Utilisation d'un dispositif d'embrayage et de freinage pour une machine d'usinage, dans laquelle le dispositif d'embrayage et de freinage comprend :
- un premier frein (1), un second frein (2) et un embrayage (3), dans laquelle
- le premier frein (1) est équipé d'un premier système d'actionnement (I) destiné à commander le premier frein (1),
- le second frein (2) d'un deuxième système d'actionnement (II) destiné à commander le second frein (2) et
- l'embrayage (3) d'un troisième système d'actionnement (III) destiné à commander l'embrayage (3), dans laquelle
- il s'agit pour les systèmes d'actionnement (I, II, III) de systèmes d'actionnement séparés, dans laquelle
- le premier frein (1) et l'embrayage (3) sont utilisés en tant que combinaison embrayage-frein, dans laquelle
- le premier système d'actionnement (I) pour le premier frein (1) et le troisième système d'actionnement (III) pour l'embrayage (3) sont commandés d'une manière retardée dans le temps, mais se chevauchant, ou
- le premier système d'actionnement (I) pour le premier frein (1) et le troisième système d'actionnement (III) pour l'embrayage (3) ne sont pas commandés simultanément.

2. Utilisation d'un dispositif d'embrayage et de freinage pour une machine d'usinage selon la revendication 1, **caractérisée en ce qu'**il s'agit pour au moins un, de préférence pour les freins (1, 2), de freins à friction.

3. Utilisation d'un dispositif d'embrayage et de freinage pour une machine d'usinage selon au moins l'une des revendications précédentes, **caractérisée en ce qu'**il s'agit pour l'embrayage (3) d'un embrayage libérable, en particulier un embrayage à friction.

4. Utilisation d'un dispositif d'embrayage et de freinage pour une machine d'usinage selon au moins l'une des revendications précédentes, **caractérisée en ce que** le premier système d'actionnement (I) comprend une conduite d'alimentation (11), un piston (12), un cylindre (13), un moyen ressort (14) et en particulier une soupape (15).

5. Utilisation d'un dispositif d'embrayage et de freinage pour une machine d'usinage selon au moins l'une des revendications précédentes, **caractérisée en ce que** le deuxième système d'actionnement (II) comprend une conduite d'alimentation (21), un piston (22), un cylindre (23), un moyen ressort (24) et en particulier une soupape (25).

6. Utilisation d'un dispositif d'embrayage et de freinage pour une machine d'usinage selon au moins l'une des revendications précédentes, **caractérisée en ce que** le troisième système d'actionnement (III) comprend une conduite d'alimentation (31), un piston (32), un cylindre (33), un moyen ressort (34) et en particulier une soupape (35).

7. Utilisation d'un dispositif d'embrayage et de freinage pour une machine d'usinage selon au moins l'une des revendications précédentes, **caractérisée en ce que** le premier frein (1) et l'embrayage (3) réalisent une combinaison embrayage-frein.

8. Utilisation d'un dispositif d'embrayage et de freinage selon au moins l'une des revendications précédentes, **caractérisée en ce que** le second frein (2) est utilisé en tant que frein de sécurité.

9. Utilisation d'un dispositif d'embrayage et de freinage selon l'une quelconque des revendications 1 - 7, **caractérisée en ce qu'**il s'agit pour la machine d'usinage d'une presse (P) avec un coulisseau de presse (S).
